# EUROPÄISCHE PATENTSCHRIFT

(11) **EP 1 776 408 B1**
(45) Veröffentlichungstag und Bekanntmachung des Hinweises auf die Patenterteilung: **29.07.2009**
(21) Anmeldenummer: 05750945.7
(22) Anmeldetag: 21.05.2005
(51) Int. Cl.: C08G 69/26, C08G 69/28, C08G 69/36

(54) **VERFAHREN ZUR KONTINUIERLICHEN HERSTELLUNG VON COPOLYAMIDEN MIT SCHMELZPUNKTEN OBERHALB VON 265°C**
METHOD FOR CONTINUOUSLY PRODUCING COPOLYAMIDES WITH MELTING POINTS GREATER THAN 265 C
PROCEDE DE PRODUCTION CONTINUE DE COPOLYAMIDES A POINTS DE FUSION SUPERIEURS A 265·C

(30) Priorität: 21.06.2004 DE 102004029935
(43) Veröffentlichungstag der Anmeldung: 25.04.2007
(73) Patentinhaber: PE POLYMER ENGINEERING GMBH & CO. FORSCHUNGS KG, 07407 Rudolstadt-Schwarza (DE)
(72) Erfinder: WILTZER, Karlheinz, 07433 Bad Blankenburg (DE); MORGENSTERN, Gunda, 07318 Saalfeld (DE); LAUSMANN, Peter, 07407 Rudolstadt (DE)
(74) Vertreter: Feldkamp, Rainer
(86) Internationale Anmeldenummer: PCT/EP2005/005528
(87) Internationale Veröffentlichungsnummer: WO 2005/123807

(56) Entgegenhaltungen:
- EP-A- 0 129 195
- DE-A1- 4 404 250

## Beschreibung

Die Erfindung bezieht sich auf ein Verfahren zur kontinuierlichen Herstellung von Copolyamiden mit Schmelzpunkten von mehr als etwa 265°C der im Oberbegriff des Anspruchs 1 genannten Art.

Es ist bekannt, dass das Einbringen von aromatischen Molekülen in Polyamide (z.B. PA 6T) die Schmelzetemperaturen und die thermische Beständigkeit gegenüber den aliphatischen Polyamiden (z.B. PA 6, PA 66) erhöht.

Für viele technische Einsatzgebiete sind solche Polyamide mit Schmelzetemperaturen oberhalb von 265°C und mit erhöhter thermischer Beständigkeit sehr interessant.

Die Verfahren zur Herstellung von teilaromatischen Polyamiden werden besonders durch die strukturbedingten hohen Schmelzeviskositäten geprägt, die auf der kettenversteifenden Wirkung des aromatischen Anteiles beruhen.

In Abhängigkeit von den aromatischen und auch kristallinen Anteilen in der Schmelze können die Schmelzeviskositäten und die Schmelzpunkttemperaturen extrem ansteigen.

Die Herstellungs- und Verarbeitungsfenster wiederum werden durch die Temperatur stark eingeschränkt, da Schmelzpunkt- und Zersetzungstemperaturen von teilaromatischen Polyamiden oft dicht beieinander liegen.

Durch die hohen Anforderungen an die technologische Prozessführung des Polykondensationsprozesses und die Reaktorgestaltung zur Herstellung von teilaromatischen Polyamiden sind neue Lösungen bezüglich der Copolyamide selbst und für deren Verfahren - insbesondere für sehr hochschmelzende teilaromatische Polyamide - zu erfinden.

Batch-Technologien zur Herstellung solcher teilaromatischer Produkte bieten den Vorteil, dass die Produktzusammensetzung definiert gesteuert und beherrscht werden kann. Jedoch überwiegt der Nachteil, dass zum vollständigen Austrag der Schmelze aus dem Reaktor nur geringe mittlere Molmassen im Polymer eingestellt werden können. Ebenso lassen sich durch die Diskontinuität der Chargenprozesse qualitative Schwankungen im Polykondensat - insbesondere in dem angestrebten Durchschnittspolymerisationsgrad und in der Molmasseverteilung - nicht vermeiden.

Aus der EP-A 410 649 und der US-A-4 963 sind zweistufig geführte Polykondensationsprozesse bekannt, die eine niedrige Viskosität in der Schmelze anstreben. Es schließen sich Nachkondensationen in der Schmelze in Einschnecken- oder Doppelschneckenextrudern an. Prinzipiell wird hierbei davon ausgegangen, dass in einer Batch-Stufe ein niedrigviskoses Präpolymerisat hergestellt wird, das in einem Extruder zum Endkondensat überführt wird.

Das Verfahren nach der EP-A 410 649 ist ein Batch-Prozess zur Herstellung dicarboxyl-terminierter, niedrigviskoser Polyamide, denen in einem Extruder äquimolare Mengen an Diamin zugesetzt werden. Die in dem Extruder ablaufende Kondensationsreaktion und die Abführung des Kondensates wird über eine Kompressions- und anschließende Dekompressionsstufe im Extruder gesteuert. Das hochmolekulare Produkt wird unter Druck aus dem Extruder ausgetragen.

Ein ähnlicher Verfahrensablauf wird in dem Patent US-A-4 963 646 beschrieben. Allerdings werden hier gesondert dicarboxyl-terminierte und diamin-terminierte Präpolymere erzeugt, die zur weiteren Polykondensation in einen Entgasungsextruder gebracht werden.

Bei diesen bekannten Batch-Verfahren werden die Probleme einer hochviskosen Schmelzeförderung durch die Herstellung von Präpolymeren in Batchsystemen umgangen. Die genaue Einhaltung der Stöchiometrie bei der Zuführung der Komponenten in den Extuder ist problembehaftet und führt zu unerwünschten Qualitätsunterschieden des Produktes.

Die EP-B 0 693 515 beschreibt, wie in mehrstufig hintereinander ablaufenden Chargenprozessen Vorkondensate von teilaromatischen teilkristallinen oder amorphen Polyamiden hergestellt werden können. Dieses Verfahren soll die Nachteile von einzeln geführten Chargenprozessen mit Dosierung von Komponenten in den Extruder hinsichtlich der stöchiometrischen Einstellungen zwischen den Komponenten ausgleichen. Die mehrstufigen Chargenprozesse werden über folgende Stufen in zwei bis drei Reaktoren gefahren:
Salzbildungsphase aus Diaminen und Dicarbonsäuren in wässrigen Lösungen bei relativ niedrigen Temperaturen und hohen Drücken, Überführungsphase zum Austrag der aufkonzentrierten Salzlösung in einen weiteren Reaktor, Reaktionsphase zur Umsetzung in Vorkondensate bei erhöhten Temperaturen und definierten Wasserdampfpartialdrücken, stationäre Phase zur Einstellung von Temperatur und Wasserdampfdruck auf die Endreaktion und die Austragsphase, bei der die Schmelze in einen Zyklon eingesprüht wird. Die hergestellten, stückigen und noch niedrigviskosen Präpolymerisate sollen im Anschluss weiter aufkondensiert werden, wobei die Verfahrensweise zur Aufkondensation nicht beschrieben wird.

Teilaromatische teilkristalline und amorphe Copolyamide, die vorzugsweise aus Systemen mit Caprolactam, Hexamethylendiamin und Terephthalsäure oder Adipinsäure, Hexamethylendiamin und Terephthalsäure hergestellt werden, sind in den Patenten EP-A 327 979 und EP-A 299 444 beschrieben. Diese Polyamide werden jedoch hinsichtlich ihrer erreichten Zähigkeit noch schlecht bewertet.

Wie den EP-A 310 752, EP-A 121 984, EP-A 291 096, DE 42 34 710 A1 oder DE 195 04 058 A1 zu entnehmen ist, wurde durch Zusätze - vorrangig durch Zugabe von Isophthalsäure und Kombinationen mit Füll- und Zuschlagstoffen - versucht, die mechanischen Eigenschaften durch eine veränderte innere Struktur der Polymere weiter zu verbessern. Hierbei soll neben den sehr guten thermischen Eigenschaften (hoher Schmelzpunkt von mehr als 265°C) der teilaromatischen Polyamide ein höherer Glasübergangspunkt (oberhalb von 80°C), eine höhere Wärmeformbeständigkeit - vor allem unter Belastung, ein höherer Kristallinitätsgrad und eine geringere Wasseraufnahme erreicht werden.

Zugaben von Isophthalsäure führen dazu, dass die Molekülstruktur der Polymeren sterisch so verändert wird, dass gewinkelte Molekülstrukturen entstehen. In der Folge steigt der Glasumwandlungspunkt T_{g} (Temperatur, bei der die Beweglichkeit der Moleküle in der Masse gegeben ist) der Polymeren an. Es besteht jedoch die Gefahr, dass der Kristallinitätsgrad stark sinkt oder keine kristalline Strukturen mehr aufgebaut werden.

Mit Erhöhung des Glasumwandlungspunktes erhöhen sich auch die Schmelzpunkte der kristallinen, teilaromatischen Polymeren. Bei einem T_{g}-Punkt von 140°C liegen die Schmelzpunkte der teilaromatischen Polyamide nahe bei bzw. oberhalb von 345°C. Im Schmelze-Herstellungsverfahren führen deshalb die eingestellten Produktregime-Temperaturen zu einer thermischen Schädigung bzw. Zersetzung des Polyamides.

Die DE 42 34 710 beschreibt zu den möglichen Rezepturen für die teilaromatischen Polyamide mit vorzugsweise Isophthalsäureanteilen ein Verfahren, durch das die Triamingehalte kleiner 0,5Gew.%, vorzugsweise kleiner 0,3Gew.% gehalten werden können.

Triamine bilden sich aus der eingesetzten Aminkomponente Hexamethylendiamin in Abhängigkeit von Temperatur und Verweilzeit. Diese Triamine führen zu Problemen während des Herstellungsprozesses und zu einer Verschlechterung der Produktqualität. Es wird daher auf verfahrenstechnisch bekannte Aspekte einer schnellen Einstellung der Reaktionstemperatur und kürzest mögliche Verweilzeiten unter Temperatur zurückgegriffen.

Die Ausgangsmonomeren werden dazu als 30%ige bis 70%ige wässrige Lösungen angesetzt und unter einem Druck von 1 bis 10 bar innerhalb von 60 Sekunden auf Temperaturen von 280 - 330°C gebracht. Die so entstandenen Präpolymere werden in eine Reaktionszone mit Temperaturen oberhalb der Schmelztemperatur (280 - 330°C) gebracht und bei Verweilzeiten von 5 bis 30 min. durch einen kontinuierlichen Wasserdampfentzug polykondensiert. Die mit dem entgasten Wasserdampf entzogenen Diamine werden zurückgeleitet.

Die kurzen, definierten Verweilzeiten sind sowohl für die Aufheizung der Rohstoffgemische als auch für die gesamte Reaktionsführung und die Wasserverdampfung zu realisieren. Dieses Verfahren verlangt daher eine sehr komplexe und aufwendige Steuerung der extrem schnell aufeinander folgenden Reaktionsstufen. Eine Lösung dieser Probleme ist technisch nicht gegeben; es wird sicherlich nur unter Laborbedingungen möglich sein.

Aus der DE-A-44 04 250 sind teilaromatische teilkristalline thermoplastische Polyamidformmassen bekannt, die Copolyamide enthalten, die aus 30 bis 44 mol% Einheiten, welche sich von der Terephthalsäure ableiten, 6 bis 20 mol% Einheiten, welche sich von Isophthalsäure ableiten, 43 bis 49,5 mol% Einheiten, welche sich von Hexamethylendiamin ableiten, 0,5 bis 7 mol% Einheiten, welche sich von aliphatischen cyclischen Diaminen mit 6 bis 30 C-Atomen ableiten, aufgebaut sind, wobei die Molprozente der vorstehenden Komponenten zusammen 100% ergeben. Die Einheiten, die sich von Hexamethylendiamin ableiten, und die Einheiten, die sich von aliphatischen cyclischen Diaminen ableiten, werden vorzugsweise äquimolar mit den Dicarbonsäureeinheiten, die sich von der Terephthalsäure beziehungsweise von der Isophthalsäure ableiten, umgesetzt. Die Schmelzpunkte dieser Copolyamide liegen im Bereich von 290°C bis 340°C. Bei diesen Verfahren soll ebenfalls durch die Verwendung kurzer Verweilzeiten im Bereich 5 bis 30 Minuten von die Bildung von Triaminen weitgehend vermieden werden.

Aus der EP-A-0 129 195 ist weiterhin ein Verfahren zur kontinuierlichen Herstellung von Polyamiden bekannt, bei dem in einer Verdampferzone eine wässrige Lösung von Salzen aus Dicarbonsäuren mit 6 bis 18 Kohlenstoffatomen und Diaminen mit 6
bis 18 Kohlenstoffatomen unter erhöhtem Druck unter gleichzeitiger Verdampfung von Wasser und Bildung eines Präpolymeren auf eine Temperatur von 250 bis 300°C erhitzt wird. Präpolymeres und Dampf werden kontinuierlich getrennt, die Dämpfe rektifiziert und die mitgeführten Diaminen werden zurückgeleitet wobei das Präpolymere in eine Polykondensationszone geleitet und unter einem Überdruck von 1 bis 10 bar bei einer Temperatur von 250 bis 300°C kondensiert wird, wobei die wässrige Salzlösung unter einem Überdruck von 1 bis 10 bar innerhalb einer Verweilzeit von höchstens 60 Sekunden erhitzt wird.

Der Erfindung liegt die Aufgabe zugrunde, ein Verfahren der eingangs genannten Art zu schaffen, das die kontinuierliche Herstellung von Polyamiden mit aromatischen Anteilen, hoher Kristallinität und mit Schmelzpunkten oberhalb von 265°C ermöglicht.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Erfindungsgemäß wird die chemische Zusammensetzung der teilaromatischen Polyamide so ausgewählt, dass teilaromatische Polyamide mit Schmelzpunkten von zumindest 265°C und Glasübergangstemperaturen von zumindest 90°C hergestellt werden, wobei in der mehrstufigen Verfahrenstechnologie die Polykondensation kontinuierlich durchgeführt wird und der Polykondensationsprozess in den einzelnen Verfahrensstufen nach systemspezifischen Parametern gesteuert wird. Hierbei werden Reaktionstemperaturen von mehr als 340°C in der Schmelze vermieden, und die Vorrichtungen sind als Kaskade angeordnet, so dass sich eine mehrstufige Verfahrenstechnologie ergibt.

Gemäß dem Anspruch 1 werden die teilaromatischen, teilkristallinen Polyamide werden in folgenden Molprozenten zur Polymersynthese eingesetzt, wobei die Summe aller polymerbildenden Komponenten einer Zusammensetzung 100 Mol% ergibt und ein stöchiometrisches Verhältnis zwischen Aminen und Carboxylsäuren bestehen muss:
25 bis 50 Mol% aromatische Dicarbonsäuren, die sich von Terephthalsäure ableiten,
30 bis 49,5 Mol% aliphatische Diamine, die sich von Hexamethylendiamin ableiten oder cycloaliphatische Diamine mit mindestens 6 C-Atomen, und
0,5 -25 Mol% aromatische Diamine.

Gemäß einer weiteren Ausgestaltung der Erfindung umfasst die Zusammensetzung weiterhin:
0 bis 25 Mol% aliphatische Dicarbonsäuren mit mindestens 6 C-Atomen und/ oder
0 - 20 Mol% einer aromatischen Aminocapronsäure mit mindestens 7 C-Atomen und/ oder
0 bis 38 Mol% eines Monomeren aus der chemischen Gruppe der Lactame oder einer aliphatischen Aminocapronsäure mit mindestens 6 C-Atomen.

Die Zusammensetzung kann weiterhin polykondensationsbeeinflussende Zusätze (Angaben in Gewichts%, da Zusatz in äquimolare Mengen an Ausgangskomponenten): 0 - 1,5 Gewichts% Stabilisatoren aus der Gruppe der Mono-/Dicarbonsäuren und/oder Mono/Diamine bezogen auf 100 Gewichts% an polymerbildenden Ausgangskomponenten, und 0 - 1,5 Gewichts% kristallisationssteuernde Additive bezogen auf 100 Ma% an polymerbildenden Ausgangskomponenten enthalten

Die Zusammensetzung enthält weiterhin vorzugsweise Wasser als Lösungs- oder Suspensionsmittel bei Reaktionsstart (Angaben in Gewichts%, da Zusatz in äquimolaren Mengen an Ausgangskomponenten) in einer Menge von 2 - 30 Gewichts% bezogen auf 100 Gewichts% an polymerbildenden Ausgangskomponenten

Gemäß dem Anspruch 1 wird eine kontinuierliche Verfahrenstechnologie mit einer ersten und zweiten kontinuierlichen Druckstufe und gegebenenfalls einer Nachkondensation verwendet.

In der ersten kontinuierlichen Druckstufe erfolgt eine Homogenisierung der Ausgangskomponenten, eine definierte Wasserentgasung des Reaktionsgemisches und Bildung von Vorpolymerisaten in wasserhaltigen Schmelzen. Alle polymerbildenden Komponenten werden als wässrige Salzlösungen und/ oder als Schmelze einschließlich von Zusätzen nach Gemischrezeptur über Vorwärmsysteme auf oberflächenvergrößemde Einbauten in einen ersten Reaktor eindosiert und die Homogenisierung der Ausgangskomponenten erfolgt über Zwangsmischeinrichtungen vor Eintritt in den Reaktor und während der Verweilzeit im ersten Reaktor. Die Schmelzeführung erfolgt vorzugsweise über oberflächenvergrößernde Einbauten im gesamten Reaktor.

Die Reaktionstemperaturen der einzelnen Komponenten werden in Abhängigkeit von dem chemischem System im Bereich von 180°C bis 260°C vor Eintritt in den ersten Reaktor eingestellt, und der Dampfdruck zum Einstellen von Polykondensatschmelzen mit definiertem Wassergehalt wird vorgegeben. Dieser Dampfdruck wird überwiegend durch den Wasserdampf in dem Gasraum des ersten Reaktors erzeugt, da die anderen beteiligten gasförmigen Komponenten hinsichtlich ihres anteiligen Partialdruckes im Gasraum vernachlässigt werden können; ihr Anteil ist stabil niedrig.

Die Steuerung des Polykondensationsprozesses erfolgt über die Wasserentgasung unter definierten Dampfdruckvorgaben im Bereich von 6 - 50 bar im Reaktor, und die Vorgabe der Verweilzeit in Abhängigkeit von der Einstellung des chemischen Gleichgewichtes unter dem vorgegebenen Dampfdruck.

Die Schmelze wird nach Ablauf der Startphase kontinuierlich über Schmelzepumpen in einen zweiten Reaktor abgegeben, in dem eine Wasserentgasung aus der Schmelze und in Abhängigkeit von aromatischen Anteil des chemischen Ausgangssystems eine Steuerung von systemabhängigen Polykondensat-Gleichgewichten in der Schmelze nach vorgegebenen Schmelzeviskosität-Schergeschwindigkeit-Profilen erfolgt.

Hierbei ist ein Dosieren von weiteren Komponenten in den Reaktor möglich, z. B. von Aminen, Stabilisatoren, Kristallisationszusätzen, Additiven und dergleichen möglich.

Die Reaktionstemperaturen für die Polykondensation werden systemabhängig im Bereich von 250°C bis 340°C eingestellt, wobei Sollwerte für die Einstellung von regelungstechnisch möglichen annähernd konstanten Drücken im Reaktorgasraum im Bereich von 0 - 30 bar zur Entgasung der wasserhaltigen Schmelze und Kondensation des Wasserdampfes vorgegeben werden.

In der zweiten Druckstufe erfolgt die Steuerung des Polykondensationsprozesses und des Polykondensatgleichgewichtes nach der systemabhängigen Entwicklung der dynamischen Schmelzeviskosität vorzugsweise und in Abhängigkeit vom aromatischen Anteil des chemischen Ausgangssystems unter Eintrag einer Schubspannung und dem Einstellen von unterschiedlichen Schergeschwindigkeiten über geeignete Vorrichtungen unter gleichzeitigem Austrag von Wasser über die Kondensationseinrichtungen.

Steuerungsmöglichkeiten sind hierbei durch das Schmelzefließverhalten, das über die dynamische Schmelzeviskosität der hochkondensierten, viskoelastischen Polymerschmelze bei bei Eintrag von Schubspannung in die Schmelze und damit von veränderten Schergeschwindigkeiten gemessen wird, und die Wasserentgasung aus der Schmelze über die Vorgabe eines definierten Dampfdruckes im Reaktor gegeben.

Durch den Eintrag einer Schub- oder Scherspannung in die Schmelze lassen sich in dem zweiten Reaktor Schmelzen mit hohem aromatischn Anteil verabeiten, die ansonsten aufgrund ihrer hohen Viskosität und damit geringem Fliessvermögen nicht oder nur unter großen Schwierigkeiten zu verarbeiten wären.

Auch hier wird der Dampfdruck überwiegend durch den Wasserdampf in dem Gasraum des Reaktors erzeugt, da die anderen beteiligten gasförmigen Komponenten hinsichtlich ihres anteiligen Partialdruckes im Gasraum vernachlässigt werden können.

Aus dem zweiten Reaktor erfolgt ein kontinuierlicher Austrag der hochkondensierten Schmelze zur Granulierung, Trocknung/ Feststoffnachkondensation oder ein kontinuierlicher Austrag der Schmelze über Schmelzepumpen in einen dritten Reaktor zur weiteren Nachkondensation in der Schmelze.

Vorzugsweise erfolgt in dem Nachkondensator oder dritten Reaktor eine Wasserentgasung aus der Schmelze und eine Steuerung des Polykondensationsgrades anhand der Erhöhung der Schmelzeviskosität beim Austritt aus dem Reaktor

In dem dritten Reaktor werden die Produkttemperaturen im Bereich von 280°C bis 340°C geregelt eingestellt, wobei eine Zwangsförderung der Schmelze durch Knetersysteme verwendet wird.

Die Nachkondensation wird vorzugsweise durch intensive Schmelzetrocknung im Vakuum oder mit Wasser klimatisiertem Stickstoff erreicht, wobei die relative Feuchte des Stickstoffes φ < 1 beträgt.

Eine weitere Steuerung der Polykondensation kann über die Schmelzetrocknung und die sich einstellende, systemabhängige dynamische Schmelzeviskosität bei kleinem Geschwindigkeitsgefälle D < 0,1 l/s bei Austrag aus dem Nachkondensator erreicht werden.

Die hochkondensierte Schmelze kann aus dem Nachkondensator abgezogen und granuliert bzw. direkt weiterverarbeitet werden.

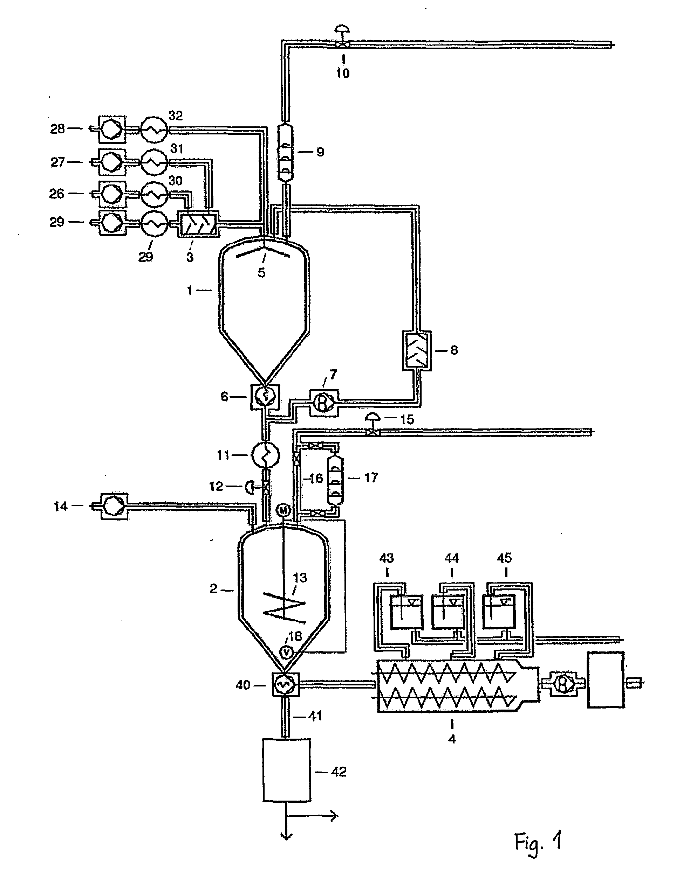

Ein Ausführungsbeispiel einer Vorrichtung zur Durchführung des erfindungsgemäßen Verfahrens wird nachfolgend anhand der Zeichnung beschrieben.

Die in der Zeichnung dargestellte Ausführungsform der Vorrichtung umfasst einen ersten Reaktor 1, einen zweiten Reaktor 2 und einen wahlweise vorgesehenen dritten Reaktor 3.

Die polymerbildenden Komponenten des Gesamtsystems aus Diaminen und Dicarboxylsäuren werden vor Einsatz in der Polykondensation zunächst in wässriger Phase in das Salz überführt. Die Salzbildung sichert die Einstellung der notwendigen äquimolaren Verhältnisse zwischen den Reaktanten zu Beginn der Reaktion. Hierdurch werden die Ausgangskomponenten in eine für ein kontinuierliches Verfahren dosierbare flüssige und/ oder suspendierte Form gebracht.

Dazu werden die festen Ausgangsstoffe in dem entsprechenden Verhältnis bzw. die schon vorgebildeten Salze in einen Lösebehälter/ Suspendierbehälter gebracht. Die Wasserüberschussmengen richten sich nach den jeweiligen aromatischen, aliphatischen oder cyclischen Komponenten und können bis zu 100 Gewichts% bezogen auf 100 Gewichts% der Ausgangskomponenten in der Lösestufe betragen. Das zum Lösen bzw. Suspendieren der Ausgangskomponenten im Überschuss eingesetzte Wasser ist vor Beginn der polymerbildenden Reaktionen - systemabhängig bis auf Wassergehalte von 2 bis maximal 30 Ma% - aus dem System zu entfernen.

Aus Stabilitätsgründen ist das Aufkonzentrieren der Salzlösung / Salzsuspension nur soweit zu führen, dass keine Oligoamidbildung einsetzt.

Der Wassergehalt der aufkonzentrierten Lösung / Suspension wird über die Dampfdruck-Sollwertvorgabe eingestellt. Zum Zurückhalten von geringen, im aufsteigenden Dampf vorhandenen monomeren Komponenten wird der aufsteigende Dampf rektifiziert. Die dadurch abgetrennten monomeren Ausgangsprodukte werden dem Produktraum zurückgeführt.

Die Aufkonzentration ist vorzugsweise unter isothermen Bedingungen durchzuführen. Über den Sollwertbegrenzung des Systemdampfdruckes wird die auszutreibende Menge an Wasser und damit die erforderliche Konzentrationsstufe für die Aufkonzentration vorgegeben.

Monomere Ausgangsprodukte mit zwei funktionellen Gruppen, wie Aminocapronsäuren oder Lactame, werden nicht in Lösungen / Suspensionen überführt, sondern ihr Einsatz erfolgt in schmelzflüssiger Form in das Mischsystem 3 der ersten Druckreaktionsstufe in dem ersten Reaktor 1.

Die aufkonzentrierten Salzlösungen / Salzsuspensionen und alle weiteren polymerbildenden schmelzflüssigen Komponenten werden über getrennte Dosierleitungen 21 - 23 und Dosierpumpen 25 - 27 entsprechend der Rezeptur und der jeweils angesetzten getrennten oder gemeinsamen Salzlösungen kontinuierlich dem Mischsystem 3 zugeführt. Dabei durchlaufen die Einsatzprodukte die Vorwärmsysteme 29 - 31 und werden auf Reaktionstemperatur gebracht. Das auf Reaktionstemperatur eingestellte Gemisch wird unmittelbar und kontinuierlich auf die speziellen oberflächenvergrößernden Einbauten 5 in dem ersten Reaktor 1 geleitet.

Additive und/ oder Reaktionshilfsmittel können über eine gesonderte Dosierpumpe 28 und ein Vorwärmsystem 32 direkt auf die oberflächenvergrößernden Einbauten 5 des Reaktors 1 geleitet werden. Es kann jedoch auch eine Zuführung über das Mischsystem 3 erfolgen.

Für eine Homogenisierung der Schmelze, insbesondere von Schmelzen mit hohen aromatischen Anteilen bzw. niedrigen Wassergehalten, besteht am Austrag des ersten Reaktors 1 die Möglichkeit, über eine Austragspumpe 6 und gegebenenfalls einer weiteren Schmelzepumpe 7 eine Zirkulationsleitung und eine Zwangsmischkammer 8 Teilströme der niedermolekularen Schmelze auszuschleusen und dem ersten Reaktor 1 über dessen oberflächenvergrößernde Einbauten 5 erneut zuzuführen.

In dem ersten Reaktor 1 erfolgt unter adiabaten Prozessbedingungen bei konstant geregeltem Druck im Gasraum eine kontinuierliche Polykondensation des Reaktionsgemisches zu niedermolekularen Polykondensaten.

Die Schmelzeführung im gesamten ersten Reaktor 1 wird über die oberflächenvergrößernden Einbauten 5 vorgenommen, um eine hohe Entgasungsrate zu realisieren.

Die Regelung der ersten Druckstufe in dem ersten Reaktor 1 wird anhand der für das jeweilige chemische System vorgegebenen Dampfdrücke im Bereich von 6 - 50 bar auf einen produktspezifischen Druck bei gleichzeitiger Entgasung der Schmelze über Dephlegmator/ Rückflußkolonne 9 und eine Druckregelung 10 vorgenommen.

Der konkret einzustellende Dampfdruck in dem ersten Reaktor 1 ist abhängig von dem gewünschten bzw. notwendigen Polyrrierisationsgrad und Wassergehalt der Schmelze, die der zweiten Kondensationsstufe in Form des zweiten Reaktors 2 zugeführt wird. Der Dampfdruck der anderen Komponenten ist - relativ gesehen zum Dampfdruck des Wassers - gering und kann daher für die Steuerung des Wassergehaltes unberücksichtigt bleiben.

Der abgeführte Wasserdampf wird zweckmäßigerweise über eine Rektifiziereinrichtung, vorzugsweise über einen Dephlegmator 9, von den wenigen, im aufsteigenden Dampf befindlichen monomeren Anteilen getrennt. Diese monomeren Anteile fließen zurück in den ersten Reaktor 1. Der Wasserdampf verlässt nach dem Dephlegmator 9 den Prozess über das Regelventil 10 zu einer Abtauchung.

Die Reaktionstemperaturen in dem ersten Reaktor 1 sind abhängig von dem gewählten chemischen System und den in dieser ersten Druckstufe notwendigen Verweilzeiten für die Einstellung eines chemischen Gleichgewichtes. Die Verweilzeiten liegen im Bereich von 0,5 bis maximal 2,5 Stunden.

Prinzipiell liegen die Schmelzetemperaturen in dem ersten Reaktor 1 im Bereich von 180°C bis 260°C. Die Schmelzetemperaturen werden nicht direkt geregelt. Es handelt sich hierbei um ein adiabates System, in dem die Reaktionstemperaturen durch die Vorwärmung der Ausgangsprodukte in dem Vorwärmeinrichtungen 29 bis 32 eingestellt werden.

Der kontinuierliche Austrag der niedermolekularen, wasserhaltigen Schmelze aus dem ersten Reaktor 1 in den zweiten Reaktor 2 erfolgt über die Schmelzepumpe 6, einen Vorwärmer 11 und ein Regelventil 12.

Wie bereits erwähnt, erfolgt in der zweiten kontinuierlichen Druckstufe in Form des zweiten Reaktors 2 die Herstellung von Polykondensaten teilaromatischer Copolyamide mit mittleren Polykondensationsgraden durch gesteuerte Wasserentgasung aus der Schmelze und in Abhängigkeit vom aromatischen Gehalt des chemischen Systems die Steuerung von systemabhängigen Polykondensat-Wasser-Gleichgewichten in der Schmelze nach vorgegebenen Schmelzeviskosität-Schergeschwindigkeit-Profilen bei definierten, systemab-hängigen Dampfdrücken

Diese weitere Polykondensation des teilaromatischen Systems wird in der zweiten Druckstufe in Abhängigkeit vom aromatischen Gehalt des chemischen Systems mit Schubspannung eintragenden Einbauten 13 vorgenommen.

Die Schmelzetemperatur im zweiten Reaktor 2 ist abhängig von dem chemischen System.

Der Druck in dem zweiten Reaktor 2 kann bis zu 99% unter den Druck der ersten kontinuierlichen Druckstufe im ersten Reaktor 1 eingestellt werden.

Prinzipiell ist die über den Vorwärmer 11 konkret einzustellende Schmelzetemperatur im Reaktor 2 von dem Schmelzpunkt des teilaromatischen Polyamides/ Copolyamides abzuleiten und maximal bei 340°C zu fahren. Der Temperaturbereich für die Schmelze liegt damit rezepturabhängig in einem Bereich von ≥ 250°C bis ≤ 340°C.

Am Reaktor 2 können zusätzliche Dosiereinrichtungen vorgesehen sein, die sowohl für die Einleitung von Additiven als auch für die Nachspeisung der mit dem Kondensat ausgeschleusten geringen Aminmengen genutzt werden können.

Zur Entgasung der wasserhaltigen Schmelze im zweiten Reaktor 2 werden Sollwerte für die Einstellung des Dampfdruckes im Reaktorgasraum im Bereich von 0 - 30 bar vorgegeben. Der Dampfdruck wird durch einen Druckregler 15 gesichert.
Die Abführung des Wasserdampfes erfolgt über eine Entgasungsleitung 16 oder einen Dephlegmator/ Rückflußkolonne 17.

Der Polykondensationsprozeß im zweiten Reaktor 2 wird über die Vorgabe einer systemabhängigen maximal einzustellenden Schmelzeviskosität und in Abhängigkeit vom aromatischen Gehalt bei Eintrag einer konstanten Schubspannung gesteuert. Am einem Meßgerät 18 erfolgt die Erfassung der aktuellen Schmelzeviskosität unter dem sich bei konstanter Schubspannung einstellenden Schergeschwindigkeitsgefälle. Eine Steuerung des Schmelzeflusses bei Schmelzen mit hohen teilaromatischen Anteilen ist durch eine Erhöhung der Schubspannung in die Schmelze über die Vorrichtungen 13 möglich:
Die Regelung der einzustellenden Dampfdrücke im zweiten Reaktor 2 auf möglichst konstante Werte erfolgt durch die Wasserentgasung aus der Schmelze über den Dephlegmator 17, die Entgasungsleitung 16 und den Druckregler 15.

Wenn das Fließverhalten der Schmelze zu gering bzw. die Schmelzeviskosität für die Gewährleistung einer kontinuierlichen Durchsatzleistung zu hoch ist, wird über die Vorrichtungen 13 eine Schubspannung in Abhängigkeit von dem strukturbedingten viskoelastischen Fließverhalten für das konkrete chemische System in das gesamte Schmelzevolumen oder einen Teil des Schmelzevolumens eingeleitet.

Diese Vorrichtungen 13 werden durch einen Motor 19 angetrieben, der regelbar ist und den Eintrag einer kontinuierlich änderbaren Schub- oder Scherkraft in die Schmelze ermöglicht, so dass deren Viskosität erniedrigt wird. Die Vorrichtungen 13 selbst können in einer dem Fachmann bekannten Weise durch an einer Ausgangswelle des Motors 19 befestigte flügel- oder messerartige Konstruktionen gebildet sein.

Die von dem Messgerät 18 kontinuierlich gemessene Schmelzeviskosität wird zur Steuerung des Motors 19 der eine Schubkraft eintragenden Vorrichtungen 13 derart verwendet, dass durch einen erhöhten Eintrag an Schubkräften sofort das strukturbedingte Fließverhalten der hochkondensierten, viskoelastischen Polymerschmelze beeinflusst wird.

Die Verweilzeit in dem zweiten Reaktor 2.1 ist abhängig von der gewählten Reaktionstemperatur und dem jeweiligen Verhältnis aromatischer und aliphatischer/cyclischer polymerbildender Komponenten. Sie beträgt 0,5 bis maximal 2,5 Stunden.

Der Austrag der Schmelze aus dem zweiten Reaktor 2 erfolgt über eine Pumpenvorrichtung 40 und eine Austragsleitung 41

Bei Erreichen der Qualitätsparameter des teilaromatischen Polyamides für eine Verarbeitung kann die Schmelze aus dem zweiten Reaktor 2 direkt über eine abschliessende Vorrichtung 42 verfestigt, granuliert und getrocknet werden.

Wird ein höherer Polykondensationsgrad des teilaromatischen Polyamides angestrebt, gibt es nach dem zweiten Reaktor 2 zwei Alternativen:
1. Alternative: Granulierung in der abschliessenden Vorrichtung 42 und Kombination zwischen Trocknung und Feststoffnachkondensation des Granulates.
2. Alternative: Zuführung der Schmelze aus dem zweiten Reaktor 2 kontinuierlich einen dritten Reaktor 4 zur Nachkondensation.

Bei der zweiten Alternative wird zur Erhöhung des Polykondensationsgrades der Schmelze aus dem zweiten Druckreaktor 2 eine dritte, kontinuierlich geführte Nachkondensationsstufe der Schmelze angeschlossen.

Der Austrag der Schmelze aus der Reaktor 2.1 erfolgt über die Pumpenvorrichtung 40 unmittelbar in den Nachkondensationsreaktor in Form des Reaktors 4.

Der Reaktor 4 enthält Knetersysteme, die dem Fließverhalten der strukturviskosen Schmelze angepasst sind. Die Schmelzeführung ist so gestaltet, dass Druck- und Entspannungszonen im Wechsel angeordnet sind. Die Entspannungszonen 43 - 45 gewährleisten - in Verbindung mit dem Anschluss von Vakuum oder von heißem, klimatisiertem Stickstoff - eine intensive Wasserdampfentgasung der Schmelze.

Die Temperaturen der Schmelze liegen im Bereich von 280°C - 340°C und befinden sich 5 bis 10 °K über dem Schmelzpunkt des jeweiligen Copolyamides. Die Reaktordurchsätze sind auf minimale Verweilzeiten einzustellen.

Die Steuerung des Polykondensationsgrades über die intensive Schmelzetrocknung wird über die Messung der sich einstellenden, systemabhängigen Erhöhung der Schmelzeviskosität bei Austrag aus dem Nachkondensator vorgenommen.

Der Austrag der Schmelze erfolgt kontinuierlich aus der letzten Druckzone des dritten Reaktors 4 über eine Pumpenvorrichtung 46 unmittelbar in die Verfestigung/Granulierung/ Verarbeitung 47.

Nachfolgend werden die Erfindung nicht beschränkende Beispiele angegeben,die die Ergebnisse zeigen, die zur Prüfung der technischen Brauchbarkeit des erfindungsgemäßen Verfahren ausgewertet wurden.

Die nachstehend aufgeführten Beispiele zur kontinuierlichen Herstellung von teilaromatischen und teilkristallinen Copolyamiden erfolgten ausschließlich in 10 Liter-Batchsystemen mit regelbaren Rührsystemen, wobei die in einem kontinuierlichem Verfahren aufeinander folgenden Verfahrensstufen von Reaktor zu Reaktor simuliert worden sind.

Beispiel 1: PA 6/6T mit mₚ = 279°C
30.5 Mol% Hexamethylendiamin
0,50 Mol% aromatisches Diamin
31.0 Mol% Terephthalsäure
38,0 Mol% E-Caprolactam

Technologie 10 Liter-Autoklaven:

Einstellen von 30Ma%igen Wasser-Salz-Lösungen, Mischen der Ausgangskomponenten unter Rühren:
Mischzeit = 1 h unter Temperatur von 100°C
N₂-Druckbeauflagung = 6 bar

1.Druckstufe = Vorpolymerisation (unter Rühren): Temperatur = 180°C
   Verweilzeit = 1 h
   Dampfdruck = 13 bar
2. Druckstufe = Polykondensation (unter Rühren): Temperatur = 280°C
   Verweilzeit = 2 h
   Dampfdruck = 1,5 bar

Beispiel 2: PA 6/6T mit mₚ = 306°C
33,5 Mol% Hexamethylendiamin
0,50 Mol% aromatisches Diamin
34,0 Mol% Terephthalsäure
32,0 Mol% ∈-Caprolactam

Technologie 10 Liter-Autoklaven:

Einstellen von 30Ma%igen Wasser-Salz-Lösungen, Mischen der Ausgangskomponenten unter Rühren:
Mischzeit = 1 h unter Temperatur von 100°C
N₂-Druckbeauflagung = 6 bar

1.Druckstufe = Vorpolymerisation (unter Rühren): Temperatur = 200°C
   Verweilzeit = 1,5 h
   Dampfdruck = 13 bar
2. Druckstufe = Polykondensation (unter Rühren): Temperatur = 300°C
   Verweilzeit = 2 h
   Dampfdruck = 3 bar

Beispiel 3 PA 6/6T mit mₚ = 316°C
37,0 Mol% Hexamethylendiamin
1,0 Mol% aromatisches Diamin
38,0 Mol% Terephthalsäure
24,0 Mol% ε-Caprolactam

Technologie 10 Liter-Autoklaven:
Einstellen von 30Ma%igen Wasser-Salz-Lösungen, Mischen der Ausgangskomponenten unter Rühren:
   Mischzeit = 1 h unter Temperatur von 100°C
   N₂-Druckbeauflagung = 6 bar

1.Druckstufe = Vorpolymerisation: Temperatur = 220°C
   Verweilzeit = 1,5 h
   Dampfdruck = 20 bar
2. Druckstufe = Polykondensation: Temperatur = 320°C
   Verweilzeit = 1,5 h
   Dampfdruck = 6 bar

## Patentansprüche

1. Verfahren zur kontinuierlichen Herstellung von Copolyamiden mit Schmelzpunkten von mehr als 265°C, bei dem in einem mehrstufigen und kontinuierlich geführten Verfahren teilaromatische und teilkristalline Polyamide folgender chemischer Systeme mit definierten Molprozenten der Einzelkomponenten in der Polymersynthese hergestellt werden:
25 bis 50 Mol% aromatische Dicarbonsäuren, die sich von Terephthalsäure ableiten
25 bis 49,5 Mol% aliphatische Diamine, die sich von Hexamethylendiamin ableiten oder cycloaliphatische Diamine mit mindestens 6 C-Atomen, und
0,5-25 Mol% aromatische Diamine,
wobei die Summe aller polymerbildenden Komponenten eine Zusammensetzung von 100 Mol% ergibt und ein stöchiometrisches Verhältnis zwischen Aminen und Carboxylsäuren besteht,
wobei der Polykondensationsverlauf in den einzelnen Reaktionsstufen über das spezifische viskoelastische Schmelzefließverhalten in Abhängigkeit von dem aromatischen Gehalt des chemischen Systems unter den technologischen Prozessparametem gesteuert wird, in einem ersten Reaktor durch den gesteuerten Entzug von Wasser bei annähernd konstanten Drücken zwischen 6 und 50 bar, Temperaturen von 180°C - 260°C adiabat und Verweilzeiten von 0,5 bis maximal 2,5 Stunden eine Polykondensation durchgeführt und der Prozess bis zu einem chemischen Polykondensat-Wasser-Gleichgewicht geführt wird, und das durch die Einstellung konstanter Dampfdrücke im Gasraum des Reaktors die Polykondensation gesteuert wird. und die Schmelze vom Ausgang des ersten Reaktors in einen zweiten Reaktor eingeleitet wird, in dem die Polykondensation durch den gesteuerten Entzug von Wasser bei Drücken von 0-30 bar(ü), bei Temperaturen von 250°C - 340°C adiabat, Verweilzeiten von 0,5 bis maximal 2,5 Stunden und unter gleichzeitigem Eintrag von Schubspannung in das gesamte Schmelzevolumen durchgeführt und der Prozess bis zu einem chemischen Polykondensat-Wasser-Gleichgewicht geführt wird.

2. Verfahren nach Anspruch 1, **dadurch gekennzeichnet, dass** die Zusammensetzung weiterhin:
0 bis 25 Mol% aliphatische Dicarbonsäuren mit mindestens 6 C-Atomen und/oder
0-20 Mol% einer aromatischen Aminocapronsäure mit mindestens 7 C-Atomen und/oder
0 bis 38 Mol% eines Monomeren aus der chemischen Gruppe der Lactame oder einer aliphatischen Aminocapronsäure mit mindestens 6 C-Atomen enthält.

3. Verfahren nach Anspruch 1 oder 2, **dadurch gekennzeichnet, dass** bei Reaktionsstart 2-30 Gewichts% Wasser, bezogen auf 100 Gewichts% an polymerbildenden Ausgangskomponenten, als Lösungs- und Suspensionsmittel eingesetzt werden.

4. Verfahren nach einem der vorhergehenden Ansprüche **dadurch gekennzeichnet, dass** dem System 0-1,5 Gewichts% Stabilisatoren aus der Gruppe der Mono-/Dicarbonsäuren und/oder Mono/Diamine bezogen auf 100 Gewichst% an polymerbildenden Ausgangskomponenten als die Polykondensation beeinflussende Zusätze dem System zugegeben werden.

5. Verfahren nach einem der vorhergehenden Ansprüche, **dadurch gekennzeichnet, dass** dem System 0 - 1,5 Gewichts% kristallisationssteuernde Additive bezogen auf 100 Gewichts% an polymerbildenden Ausgangskomponenten als die Polykondensation beeinflussende Zusätze dem System zugegeben werden.

6. Verfahren nach einem der vorhergehenden Ansprüche, **dadurch gekennzeichnet, dass** der Wasserentzug aus der Schmelze durch oberflächenvergrößemde Einbauten im gesamten Reaktor intensiviert und der Wasserdampf über Dephlegmator abgeführt wird.

7. Verfahren nach einem der vorhergehenden Ansprüche, **dadurch gekennzeichnet, dass** die aromatischen und aliphatischen Ausgangskomponenten als aufkonzentrierte wässrige Salzlösungen mit maximal 30% Wasseranteil und die Lactame bzw. Aminocapronsäuren als wasserfreie Schmelzen über Vorwärm- und Mischsysteme dem ersten Reaktor zugeführt und homogenisiert werden.

8. Verfahren nach einem der vorhergehenden Ansprüche, **dadurch gekennzeichnet, dass** eine weitere Homogenisierung der Schmelze durch Abziehen von Teilströmen am unteren Auslauf des ersten Reaktors und eine Umlauffahrweise über Mischsysteme in den Reaktorkopf erreicht wird.

9. Verfahren nach Anspruch 8, **dadurch gekennzeichnet, dass** eine Direktdosierung für weitere Polykondensationszusätze am ersten Reaktor vorhanden ist, die gegebenenfalls auch dem Mischsystem zudosiert werden.

10. Verfahren nach einem der vorhergehenden Ansprüche, **dadurch gekennzeichnet, dass** die Einstellung konstanter Dampfdrücke im Gasraum des zweiten Reaktors systembezogen abgeleitet und vorgegeben wird und der Wasserdampf abgeführt und anschließend kondensiert wird.

11. Verfahren nach Anspruch 10, **dadurch gekennzeichnet, dass** die Abführung des Wasserdampfes über eine Rückflusskolonne erfolgt.

12. Verfahren nach einem der vorhergehenden Ansprüche, **dadurch gekennzeichnet, dass** der zweite Reaktor über Schubspannung eintragende Einbauten aufweist, die in dem Schmelzevolumen schmelzeflussabhängige Schergeschwindigkeitsgefälle erzeugen, und dass die Schmelzeviskosität am unteren Auslauf des Reaktors über ein Schmelzeviskosimeter gemessen und der Messwert des Schmelzeviskosimeters zur Steuerung der die Schubspannung eintragenden Einbauten im Reaktor verwendet wird.

13. Verfahren nach Anspruch 12, **dadurch gekennzeichnet, dass** die Leistung und das Drehmoment der die Schubspannung eintragenden Einbauten über die Vorgabe von systemabhängigen Sollwerten für die Schmelzeviskosität bzw. für die Fließeigenschaften der Schmelze gesteuert wird.

14. Verfahren nach einem der Ansprüche 9 bis 13, **dadurch gekennzeichnet, dass** die Schmelze am Auslauf des zweiten Reaktors verfestigt, granuliert, getrocknet und/oder feststoffnachkondensiert wird.

15. Verfahren nach einem der Ansprüche 9 bis 13, **dadurch gekennzeichnet, dass** die Schmelze am Auslauf des zweiten Reaktors in eine weitere Nachkondensationsstufe gebracht wird.

16. Verfahren nach Anspruch 15, **dadurch gekennzeichnet, dass** die Nachkondensationsstufe Knetersysteme aufweist und einen Zonenaufbau besitzt, der aus einer Reihe von Druck- und Entgasungszonen besteht, wobei die Austrittszone des Reaktors immer einer Druckzone entspricht.

17. Verfahren nach Anspruch 16, **dadurch gekennzeichnet, dass** die Schmelze in der Nachkondensationsstufe bei Temperaturen von 280°C - 350°C und minimalen Verweilzeiten getrocknet wird.

18. Verfahren nach Anspruch 16 und 17, **dadurch gekennzeichnet, dass** die Entgasungszonen Vakuumanschlüsse und die Druckzonen Anschlüsse für klimatisierten Stickstoff besitzen.

19. Verfahren nach Anspruch 16, 17 oder 18, **dadurch gekennzeichnet, dass** die Schmelzeviskosität am unteren Auslauf des zweiten Reaktors über ein Schmelzeviskosimeter gemessen wird und der Messwert des Schmelzeviskosimeters zur Steuerung der Knetersysteme genutzt wird.

## Claims

1. A method for continuously producing copolyamides having melting points of more than 265 °C, in which, in a multistage and continuous method, partly aromatic and semicrystalline polyamides of the following chemical systems having defined mole percentages of the individual components are produced in the polymer synthesis:
from 25 to 50 mol% of aromatic dicarboxylic acids which are derived from terephthalic acid,
from 25 to 49.5 mol% of aliphatic diamines which are derived from hexamethylenediamine, or cycloaliphatic diamines having at least 6 carbon atoms, and 0.5-25 mol% of aromatic diamines,
the sum of all polymer-forming components producing a composition of 100 mol% and there being a stoichiometric ratio between amines and carboxylic acids,
wherein the course of the polycondensation in the individual reaction stages is controlled via the specific viscoelastic melt flow behaviour as a function of the aromatic content of the chemical system under the technological process parameters,
wherein in a first reactor, a polycondensation is carried out by the controlled removal of water at approximately constant pressures of from 6 to 50 bar, temperatures of 180°C - 260 °C under adiabatic conditions and with residence times from 0.5 to 2.5 hours, and the process is continued to a chemical polycondensate/water equilibrium, and in that the polycondensation is controlled by establishing constant vapor pressures in the gas space of the reactor, and the melt is passed from the exit of the first reactor into a second reactor, in which the polycondensation is carried out by the controlled removal of water at pressures of 0-30 bar (gage pressure), at temperatures of 250 °C-340 °C under adiabatic conditions, with residence times from 0.5 to 2.5 hours, with simultaneous introduction of shear stress into the total melt volume, and the process is continued to a chemical polycondensate/water equilibrium.

2. The method as claimed in claim 1, **characterized in that** the composition furthermore contains:
from 0 to 25 mol% of aliphatic dicarboxylic acids having at least 6 carbon atoms and/or 0-20 mol% of an aromatic aminocaproic acid having at least 7 carbon atoms and/or from 0 to 38 mol% of a monomer from the chemical group consisting of the lactams or an aliphatic aminocaproic acid having at least 6 carbon atoms.

3. The method as claimed in claim 1, **characterized in that** at the start of the reaction 2-30% by weight of water, based on 100% by weight of polymer-forming starting components, are used as solvent or suspending medium.

4. The method as claimed in claim 1, **characterized in that** 0-1.5% by weight of stabilizers from the group consisting of the mono-/dicarboxylic acids and/or mono-/diamines, based on 100% by weight of polymer-forming starting components, are added to the system as polycondensation-influencing additives to the system.

5. The method as claimed in claim 1, **characterized in that** 0-1.5% by weight of crystallization-controlling additives, based on 100% by weight of polymer-forming starting components, are added to the system as polycondensation-influencing additives to the system.

6. The method as claimed in claim 1, **characterized in that** the removal of water from the melt is enhanced by surface-enlarging installation in the total reactor and the steam is removed via a dephlegmator.

7. The method as claimed in claim 2, **characterized in that** the aromatic and aliphatic starting components are fed to the first reactor as concentrated aqueous salt solutions having a maximum water content of 30%, and the lactams or aminocaproic acids as anhydrous melts via preheating and mixing systems, and are homogenized.

8. The method as claimed in claim 7, **characterized in that** a further homogenization of the melt is achieved by removal of part-streams at the lower outflow of the reactor and a circulation procedure via mixing systems into the top of the reactor.

9. The method as claimed in claim 8, **characterized in that** a direct metering for further polycondensation additives is present on the reactor, which additives are optionally also metered into the mixing system.

10. The method as claimed in claim 1, **characterized in that** the establishment of constant vapor pressure in the gas space of the reactor is derived and predetermined in a system-related manner and the steam is removed and then condensed.

11. The method as claimed in claim 10, **characterized in that** the removal of the steam is effected via a reflux column.

12. The method as claimed in claim 11, wherein the second reactor has shear stress-introducing installations which produce melt flow-dependent shear rate gradients in the melt volume, and in that the melt viscosity at the lower outflow of the reactor is measured by means of a melt viscometer and the measured value of the melt viscometer is used for controlling the shear stress-introducing installations in the reactor.

13. The method as claimed in claim 12, **characterized in that** the power torque of the shear stress-introducing installations is controlled by specifying system-dependent desired values for the melt viscosity or for the flow properties of the melt.

14. The method as claimed in claim 12, **characterized in that** the melt is solidified, granulated, dried and/or subjected to solid postcondensation at the outflow of the second reactor.

15. The method as claimed in claim 12, **characterized in that** the melt is introduced into a further postcondensation stage at the outflow of the second reactor.

16. The method as claimed in claim 15, **characterized in that** the postcondensation stage has kneader systems and possesses a zone structure which consists of a series of pressure and degassing zones, the exit zone of the reactor always corresponding to a pressure zone.

17. The method as claimed in claim 16, **characterized in that** the melt in the postcondensation stage is dried at temperatures of from 280 °C to 350 °C and with minimum residence times.

18. The method as claimed in claim 16, **characterized in that** the degassing zones have vacuum connections and the pressure zones have connections for conditioned nitrogen.

19. The method as claimed in claim 12 or 15, **characterized in that** the melt viscosity is measured at the lower outflow of the second reactor by means of a melt viscometer and the measured value of the melt viscometer is used for controlling the kneader systems.

## Revendications

1. Procédé de production en continu de copolyamides avec des points de fusion supérieur à 265 °C, dans lequel, lors d'un procédé mené en plusieurs étapes et en continu, on produit des polyamides partiellement aromatiques et partiellement cristallins des systèmes chimiques suivants, présentant des pourcentages en moles définis des différents composants dans la synthèse du polymère : 25 à 50 % en moles d'acides dicarboxyliques aromatiques qui dérivent de l'acide téréphtalique, 25 à 49,5 % en moles de diamines aliphatiques qui dérivent de l'hexaméthylènediamine, ou de diamines cycloaliphatiques comportant au moins 6 atomes de carbone, et 0,2 à 25 % en moles de diamines aromatiques, dans lequel la somme de tous les composants formant des polymères donne une composition de 100 % en moles et dans lequel il existe un rapport stoechiométrique entre les amines et les acides carboxyliques,
dans lequel le déroulement de la polycondensation est commandé dans les différentes étapes de réaction via l'aptitude à l'écoulement viscoélastique spécifique de la masse fondue en fonction de la teneur aromatique du système chimique, en considérant les paramètres technologiques de procédé,
dans lequel on réalise dans un premier réacteur, par l'élimination commandée d'eau à des pressions approximativement constantes comprises entre 6 et 50 bar, des températures comprises entre 180 °C et 260 °C, de façon adiabatique, et des temps de séjour de 0,5 à 2,5 heures au maximum, une polycondensation, et le procédé est conduit jusqu'à un équilibre chimique polycondensat-eau, et on commande la polycondensation par le réglage de pressions de vapeur constantes dans l'espace de gaz du réacteur, et la masse fondue est dirigée depuis la sortie du premier réacteur dans un second réacteur, dans lequel la polycondensation est conduite par l'élimination commandée d'eau à des pressions comprises entre 0 et 30 bar (environ), à des températures comprises entre 250 °C et 340 °C, de façon adiabatique, et avec des temps de séjour de 0,5 à 2,5 heures aux maximum, en appliquant simultanément une sollicitation au cisaillement dans l'ensemble du volume de la masse fondue, et
dans lequel le processus est réalisé jusqu'à un équilibre chimique polycondensat-eau.

2. Procédé selon la revendication 1, **caractérisé en ce que** la composition contient en outre : 0 à 25 % en moles d'acides dicarboxyliques aliphatiques comportant au moins 6 atomes de carbone et/ou 0 à 20 % en moles d'un acide amino-caproïque aromatique comportant au moins 7 atomes de carbone et/ou 0 à 38 % en moles d'un monomère issu du groupe chimique des lactames ou d'un acide amino-caproïque aliphatique comportant au moins 6 atomes de carbone.

3. Procédé selon la revendication 1 ou 2, **caractérisé en ce qu'**au début de la réaction, on utilise 2 à 30 % en poids d'eau, sur la base des 100 % en poids des composants de départ formant des polymères, en tant que solvant ou agent de mise en suspension.

4. Procédé selon l'une des revendications précédentes, **caractérisé en ce que** l'on ajoute au système 0 à 1,5 % en poids de stabilisants issus du groupe des acides mono-/dicarboxyliques et/ou des mono-/diamines, sur la base des 100 % en poids des composants de départ formant des polymères, en tant qu'additifs influençant la polycondensation.

5. Procédé selon l'une des revendications précédentes, **caractérisé en ce que** l'on ajoute au système 0 à 1,5 % en poids d'additifs commandant la cristallisation, sur la base des 100 % en poids des composants de départ formant des polymères, en tant qu'additifs influençant la polycondensation.

6. Procédé selon l'une des revendications précédentes, **caractérisé en ce que** l'élimination d'eau de la masse fondue dans l'ensemble du réacteur est intensifiée par des inserts augmentant la surface, et **en ce que** la vapeur d'eau est dégagée par un déflegmateur.

7. Procédé selon l'une des revendications précédentes, **caractérisé en ce que** les composants de départ aromatiques et aliphatiques sont amenés dans le premier réacteur en tant que solutions salines aqueuses concentrées présentant une proportion d'eau d'au maximum 30 %, et les lactames ou les acides amino-caproïques sont amenés en tant que masses fondues anhydres via des systèmes de pré-chauffage et de mélange, et sont homogénéisés.

8. Procédé selon l'une des revendications précédentes, **caractérisé en ce qu'**une autre homogénéisation de la masse fondue est atteinte par soutirage de courants partiels au niveau de la sortie inférieure du premier réacteur, et un fonctionnement en circulation par des systèmes de mélange dans la tête de réacteur.

9. Procédé selon la revendication 8, **caractérisé en ce qu'**au niveau du premier réacteur se fait un dosage direct des autres additifs de polycondensation, qui sont éventuellement aussi ajoutés par dosage dans le système de mélange.

10. Procédé selon l'une des revendications précédentes, **caractérisé en ce que** le réglage des pressions de vapeur constantes dans l'espace du gaz du second réacteur est fonction du système et est prédéfini, et **en ce que** la vapeur d'eau est évacuée puis condensée.

11. Procédé selon la revendication 10, **caractérisé en ce que** l'évacuation de la vapeur d'eau se fait par une colonne de reflux.

12. Procédé selon l'une des revendications précédentes, **caractérisé en ce que** le second réacteur présente des inserts appliquant une sollicitation au cisaillement, qui génèrent dans le volume de masse fondue des gradients de vitesse de cisaillement qui sont fonction de l'écoulement de la masse fondue, et **en ce que** la viscosité de la masse fondue est mesurée au niveau de la sortie inférieure du réacteur par un viscosimètre pour masse fondue et la valeur de mesure du viscosimètre pour masse fondue est utilisée dans le réacteur pour commander les inserts appliquant la sollicitation au cisaillement.

13. Procédé selon la revendication 12, **caractérisé en ce que** la capacité et le couple de rotation des inserts appliquant la sollicitation au cisaillement sont commandés par la spécification de valeurs théoriques, fonction du système, de la viscosité de la masse fondue ou de l'aptitude à l'écoulement de la masse fondue.

14. Procédé selon l'une des revendications 9 à 13, **caractérisé en ce que** la masse fondue en sortie du second réacteur est solidifiée, granulée, séchée et/ou post-condensée en phase solide.

15. Procédé selon l'une des revendications 9 à 13, **caractérisé en ce que** la masse fondue en sortie du second réacteur est amenée vers une autre étape de post-condensation.

16. Procédé selon la revendication 15, **caractérisé en ce que** l'étape de post-condensation présente des systèmes de malaxage et possède une structure de zones qui se compose d'une série de zones de pression et de zones de dégazage, la zone de sortie du réacteur correspondant toujours à une zone de pression.

17. Procédé selon la revendication 16, **caractérisé en ce que** la masse fondue dans la zone de post-condensation est séchée en utilisant des températures comprises entre 280 °C et 350 °C et des temps de séjour minimum.

18. Procédé selon la revendication 16 et 17, **caractérisé en ce que** les zones de dégazage possèdent des raccordements au vide et les zones de pression possèdent des raccordements pour l'azote conditionné ou climatisé.

19. Procédé selon la revendication 16, 17 ou 18, **caractérisé en ce que** la viscosité de la masse fondue au niveau de la sortie inférieure du second réacteur est mesurée par un viscosimètre pour masse fondue, et que la valeur de mesure du viscosimètre pour masse fondue est exploitée pour commander les systèmes de malaxage.
